# EUROPEAN PATENT SPECIFICATION

(11) **EP 2 644 355 B1**
(45) Date of publication and mention of the grant of the patent: **04.03.2020**
(21) Application number: 13159930.0
(22) Date of filing: 19.03.2013
(51) Int. Cl.: B29C 45/76

(54) **Injection molding machine**
Spritzgießmaschine
Machine de moulage à injection

(30) Priority: 30.03.2012 JP 2012082875
(43) Date of publication of application: 02.10.2013
(73) Proprietor: SUMITOMO HEAVY INDUSTRIES, LTD., Tokyo 141-6025 (JP)
(72) Inventor: Sato, Hiroshi, Chiba 263-0001 (JP); Tsunemi, Koki, Chiba 263-0001 (JP); Yokoo, Shinji, Chiba 263-0001 (JP)
(74) Representative: Hoffmann Eitle

(56) References cited:
- EP-A1- 1 306 188
- EP-A2- 1 788 465
- JP-A- 2011 031 475

## Description

### BACKGROUND OF THE INVENTION

### 1. Field of the Invention

The present invention relates to an injection molding machine.

### 2. Description of the Related Art

A injection molding machine manufactures a molded part by injecting molten resin into the cavity of a mold device and solidifying the molten rein (See, e.g., Patent Document 1). The molded part is ejected from the injection molding machine by an ejector and delivered to a belt conveyor.

The injection molding machine exchanges signals with external devices such as the ejector and the belt conveyor. For example, the injection molding machine may transmit a predetermined signal to an external device when the status of the injection molding machine satisfies a predetermined condition. Also, a predetermined operation of the injection molding machine may be disabled depending on whether a predetermined signal from an external device is input to the injection molding machine.
[Patent Document 1] International Patent Publication No. WO/2005/068155

To change the conditions for outputting a predetermined signal to an external device from a conventional injection molding machine, the program of the injection molding machine has to be changed. Also, to change the operation of the injection molding machine to be disabled depending on whether a predetermined signal from an external device is input, the program of the injection molding machine has to be changed. The need to change the program of the injection molding machine in such cases creates an inconvenience for the user.

Another document is EP 1 788 465 A2 referring to a machine signal processing device. First and second OR operation fields for setting signals that represent the states of the machine are provided on a setting screen. Carrying out OR operations on signals set in the first OR operation fields and carrying out OR operations on signals set in the second OR operation fields, and operation is carried out on the results of those OR to provide an output signal.

### SUMMARY OF THE INVENTION

It is a general object of at least one embodiment of the present invention to provide an injection molding machine that substantially obviates one or more problems caused by the limitations and disadvantages of the related art. A first particular object of at least one embodiment of the present invention is to provide an injection molding machine that is capable of easily changing the conditions for outputting a predetermined signal to an external device. A second particular object of at least one embodiment of the present invention is to provide an injection molding machine that is capable of easily changing the operation to be disabled depending on whether a predetermined signal from an external device is input.

According to a first embodiment of the present invention, an injection molding machine is provided that includes the features of claim 1.

According to a second embodiment of the present invention, an injection molding machine is provided that includes a controller that disables an operation of the injection molding machine depending on whether a predetermined signal from an external device of the injection molding machine is input, a display unit that displays a setting screen relating to the operation to be disabled depending on whether the predetermined signal is input, and an operations unit that accepts an input operation by a user. The setting screen includes an input field for prompting the user to select a condition from a candidate list of plural conditions relating to the operation to be disabled depending on whether the predetermined signal is input, and the controller determines the operation to be disabled depending on whether the predetermined signal is input based on the condition selected at the input field.

According to an aspect of the present invention, an injection molding machine may be provided that can easily change the conditions for outputting a predetermined signal from the injection molding machine to an external device. According to another aspect of the present invention, an injection molding machine may be provided that can easily change the conditions relating to the operation to be disabled depending on whether a predetermined signal from an external device is input.

### BRIEF DESCRIPTION OF THE DRAWINGS

Other objects, features and advantages of the present invention will become more apparent from the following detailed description when read in conjunction with the accompanying drawings, in which:
FIG. 1 is a diagram showing a mold clamping device, an ejector, and a mold thickness adjusting device of an injection molding machine according to an embodiment of the present invention;
FIG. 2 is a diagram showing an injection device and a moving device of the injection molding machine;
FIG. 3 is a diagram showing a controller, a display unit, and an operations unit of the injection molding machine;
FIG. 4 is a diagrams showing an exemplary setting screen for designating conditions for outputting a predetermined signal to an external device; and
FIGS. 5A and 5B are diagrams showing an exemplary setting screen for designating conditions relating to an operation of the injection molding machine to be disabled depending on whether a predetermined signal from an external device is input.

### DETAILED DESCRIPTION OF THE PREFERRED EMBODIMENT

In the following, embodiments of the present invention are described with reference to the accompanying drawings. It is noted that identical or corresponding features shown in two or more of the drawings are given the same reference numerals and their descriptions may be omitted.

During one cycle, the injection molding machine performs a mold closing process for closing the mold device, a mold clamping process for clamping the mold device, a nozzle touch process for pushing a nozzle of the injection molding machine into the clamped mold device, an injection process for injecting resin from the nozzle of the injection molding machine and filling the mold device with resin, and a pressure keeping process for keeping the fill pressure of the resin. Then, the injection molding machine performs a cooling process for solidifying the resin within the mold device, a metering process for metering resin to be used for manufacturing the next molded part, a mold opening process for opening the mold device, and an ejecting process for ejecting the molded part from the opened mold device. By repeatedly performing the above sequence of processes, the injection molding machine may successively manufacture multiple molded parts.

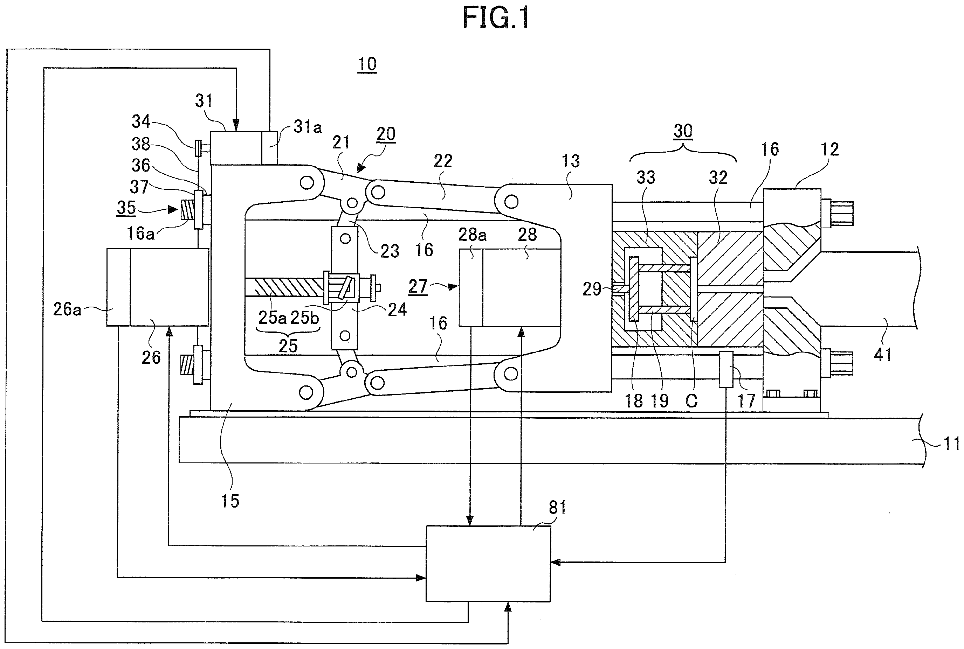

FIG. 1 is a diagram showing a mold clamping device, an ejector, and a mold thickness adjusting device of an injection molding machine 10 according to an embodiment of the present invention. FIG. 1 shows the injection molding machine performing a mold clamping process. In the following descriptions of the mold clamping device, the ejector, and the mold thickness adjusting device, it is assumed that the moving direction of a movable platen 13 for closing a movable mold 33 of a mold device 30 corresponds to a forward direction, and the moving direction of the movable platen 13 for opening the mold device 30 corresponds to a backward direction.

The injection molding machine 10 includes a frame 11, a stationary platen 12 that is fixed to the frame 11, and a toggle support 15 that is spaced apart from the stationary platen 12. Plural (e.g., 4) tie-bars 16 are arranged across the space between the stationary platen 12 and the toggle support 15.

The injection molding machine 10 also includes the movable platen 13 that is arranged to face the stationary platen 12 and is capable of moving back and forth (left and right directions of FIG. 1) along the tie-bars 16. Further, the movable mold 33 is attached to the face of the movable platen 13 facing the stationary platen 12, and a stationary mold 32 is attached to a face of the stationary platen 12 facing the movable platen 13. The stationary mold 32 and the movable mold 33 form the mold device 30.

An ejector plate 18 is accommodated within the internal space of the movable mold 33 so that the ejector plate 18 may move back and forth. An ejector pin 19 protruding in the forward direction is fixed to the ejector plate 18. The front end face of the ejector pin 19 faces a cavity C when molten resin is filled into the cavity C.

The injection molding machine 10 further includes a toggle mechanism 20 that is arranged between the movable platen 13 and the toggle support 15, a mold clamping motor 26 that drives the toggle mechanism 20, a ball screw mechanism 25 corresponding to a transmission mechanism that converts the rotational motion of the mold clamping motor 26 into a linear motion and transmits the converted motion to the toggle mechanism 20. It is noted that the stationary platen 12, the movable platen 13, the toggle support 15, the toggle mechanism 20, and the mold clamping motor 26 form the mold clamping device.

The toggle mechanism 20 includes a cross head 24 that is movable in directions parallel to the mold closing and opening directions, a second toggle lever 23 that is swingably connected to the cross head 24, a first toggle lever that is swingably connected to the toggle support 15, and a toggle arm 22 that is swingably connected to the rear face of the movable platen 13. The first toggle lever 21 and the second toggle lever 23 are linked together, and the first toggle lever 21 and the toggle arm 22 are linked together. It is noted that the toggle mechanism 20 corresponds to a so-called five-point double-toggle mechanism having upper and lower portions that are symmetrical.

The ball screw mechanism 25 includes a ball screw nut 25a that is fixed to the cross head 24 and a ball screw shaft 25b that is screwed to the ball screw nut 25a, for example. The ball screw shaft 25b is rotatably supported by the toggle support 15. The ball screw shaft 25b rotates in response to the rotation of an output shaft of the mold clamping motor 26. In turn, the ball screw nut 25a moves back and forth which causes the cross head 24 to move back and forth.

The toggle mechanism 20 may be driven by driving the mold clamping motor 26 and causing the cross head 24 corresponding to a driven member to move back and forth. When the cross head 24 is moved forward (to the right in FIG. 1), the movable 13 is moved forward to perform a mold closing operation. Then, a clamping force equal to the thrust force of the mold clamping motor 26 multiplied by the toggle rate is generated and a mold clamping operation is performed. It is noted that a clamping force sensor 17 is attached to the tie-bar 16. The clamping force sensor 17 detects the clamping force at intervals of a predetermined time period by detecting the strain (extension) of the tie-bar 16 that extends out according to the clamping force. The detected clamping force is sequentially input to a controller 81. When the cross head 24 is moved backward (to the left in FIG. 1), the movable platen 13 is moved backward to perform a mold opening operation.

A mold position sensor 26a for detecting the distance between the movable mold 33 and the stationary mold 32 is attached to the mold clamping motor 26. The mold position sensor 26a may be an encoder that detects the rotational speed of the mold clamping motor 26, for example, and is configured to send a detection signal indicating the detected mold position to the controller 81.

It is noted that in the present embodiment, the mold clamping device uses the toggle mechanism 20 to generate the clamping force. However, the mold clamping device used in the present invention is not limited to such type of mold clamping device. For example, in one alternative embodiment, the thrust force generated by the mold clamping motor 26 may be directly transmitted to the movable platen 13 as a direct clamping force without using the toggle mechanism 20. In another embodiment, a thrust force generated by a mold clamping cylinder may be transmitted to the movable platen as a direct clamping force. In a further embodiment, mold closing and opening operations may be realized by a linear motor, and a mold clamping operation may be realized using an electromagnet.

The injection molding machine 10 also includes an ejector 27 for ejecting a molded part. The ejector 27 includes an ejector motor 28 and an ejector rod 29. The rotational motion of the ejector motor 28 is converted into a linear motion by a ball screw mechanism (not show) and transmitted to the ejector rod 29.

When the ejector motor 28 rotates forward, the ejector rod 29 moves forward, the ejector plate 18 and the ejector pin 19 move forward, and the molded part may be ejected from the movable mold 33. When the ejector motor 28 rotates backward, the ejector rod 29 moves backward, and the ejector plate 18 and the ejector pin 19 move back to their original positions.

An ejector position sensor 28a for detecting the position of the ejector rod 29 is attached to the ejector motor 28. The ejector position sensor 28a may be an encoder that detects the rotational speed of the ejector motor 28, for example, and is configured to send a detection signal indicating the detected ejector position to the controller 81.

The injection molding machine 10 also includes a mold thickness adjusting device 35 that adjusts the distance between the stationary platen 12 and the toggle support 15 according to the thickness of the mold device 30. The mold thickness adjusting device 35 may be used when the mold device 30 is exchanged, for example, and includes a mold thickness adjusting motor 31 and an adjusting nut 36.

The adjusting nut 36 is supported by the toggle support 15 so that it may rotate freely but may not move back and forth with respect to the toggle support 15. The adjusting nut 36 is screwed together with a screw shaft portion 16a formed at the rear end of the tie-bar 16 that penetrates through the toggle support 15. The adjusting nut 36 and the screw shaft portion 16a form a motion direction converting unit that converts the rotational motion of the adjusting nut 36 into a linear motion of the tie-bar 16. It is noted that plural adjusting nuts 36 are provided according to the number of the tie-bars 16. Further, driven gears 37 are arranged around the outer peripheral faces of the adjusting nuts 36.

The mold thickness adjusting motor 31 is fixed to the toggle support 15. A drive gear 34 is arranged around the rotational axis of the mold thickness adjusting motor 31. A timing belt 38 is arranged over the drive gear 34 and the driven gears 37. It is noted that instead of arranging the timing belt 38, an intermediate gear may be arranged between the drive gear 34 and each of the driven gears 37, for example.

When the mold thickness adjusting motor 31 rotates, the adjusting nuts 36 rotate in synch with the rotation of the mold thickness adjusting motor 31, and the tie-bars 16 move back and forth with respect to the toggle support 15. In this way, the distance between the toggle support 15 and the movable platen 12 may be adjusted (optimized) according to the thickness of the mold device 30.

A mold thickness position sensor 31a for detecting the position of the tie-bar 16 with respect to the toggle support 15 is attached to the mold thickness adjusting motor 31. The mold thickness position sensor 31a may be an encoder that detects the rotational speed of the mold thickness adjusting motor 31, for example, and is configured to output a detection signal to the controller 81.

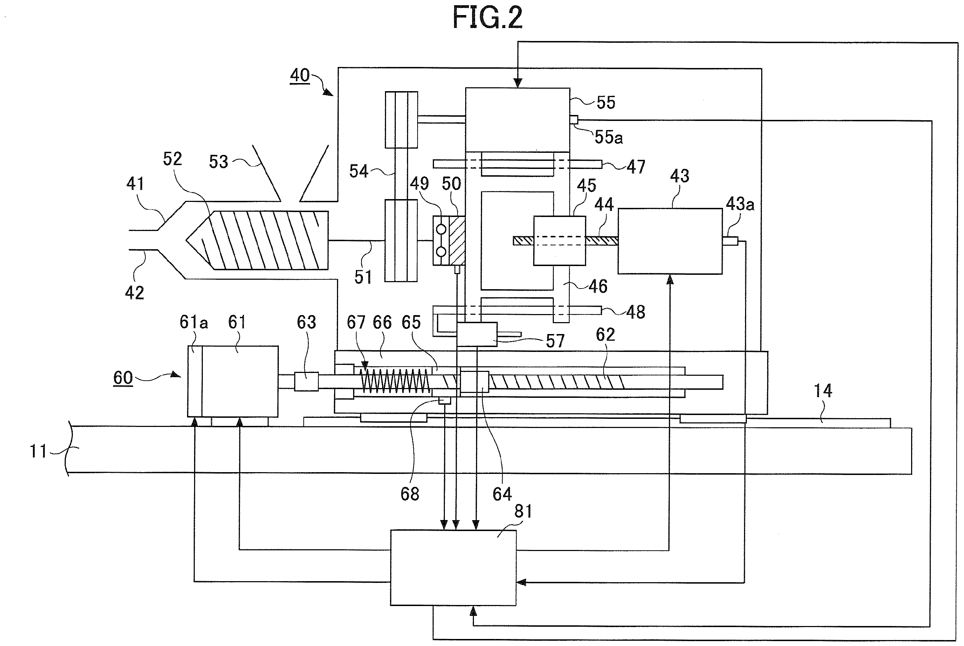

FIG. 2 is a diagram showing an injection device 40 and a moving device 60 of the injection molding machine 10 according to the present embodiment. It is noted that in the following descriptions of the injection device 40 and the moving device 60, in contrast to the above description of the mold clamping device, it is assumed that the injection direction of resin corresponds to the forward direction and the direction opposite the injection direction of resin corresponds to the backward direction.

The injection molding machine 10 includes the injection device 40 that has a heating cylinder 41 for melting resin and a nozzle 42 for injecting the molten resin into the cavity C of the mold device 30 to fill up the cavity C with the molten resin. The injection device 40 also has an injection motor 43. The rotation of the injection motor 43 is transmitted to a ball screw shaft 44. A ball screw nut that moves back and forth in response to the rotation of the ball screw shaft 44 is screwed to the ball screw shaft 44 and is fixed to a pressure plate 46. The pressure plate 46 is arranged to be movable along guide bars 47, 48 that are fixed to a base frame (not shown). The back-and-forth motion of the pressure plate 46 is transmitted to a screw 52 via a bearing 49, a resin pressure detector 50, and an injection shaft 51. The screw 52 is arranged to be rotatable within the heating cylinder 41 and movable along the direction of its rotational axis. A hopper 53 for supplying resin is arranged at the rear portion of the heating cylinder 41. The rotational motion of a metering motor 55 is transmitted to the injection shaft 51 via a linking member 54 such as a belt or a pulley. That is, the injection shaft 51 is driven and rotated by the metering motor 55 to thereby rotate the screw 52.

In a metering process, the metering motor 55 is driven to rotate the screw 52 so that resin pellets supplied to the rear end portion of the screw 52 may be transferred to the front portion of the screw 52. During this process, the resin pellets are softened and melted. The accumulation of the molten resin at the front portion of the screw 52 causes the screw 52 to move backward.

After the metering process, the injection motor 43 is driven to move the screw 52 backward at a predetermined speed by a predetermined distance without rotating the screw 52 to perform a suck-back process. In the suck-back process, the pressure of the molten resin accumulated at the front portion of the screw 52 is reduced.

In an injection process (also referred to as "filling process"), the injection motor 43 is driven to move the screw 52 forward to inject the molten resin from the nozzle 42 and press the molten resin into the cavity C. The pressing force of the screw 52 for pressing the molten resin is detected as a reaction force by the resin pressure detector 50. That is, the resin pressure (injection pressure of resin) applied to the screw 52 is detected by the resin pressure detector 50. The detected resin pressure is then input to the controller 81. Also, since thermal contraction of resin occurs within the cavity C as a result of the cooling of the resin, a pressure keeping process is performed to replenish resin to compensate for the thermal contraction of the resin. In the pressure keeping process, the resin pressure (injection pressure of resin) applied to the screw 52 is maintained at a predetermined pressure.

A screw position sensor 57 for detecting the position of the screw 52 is attached to the pressure plate 46. The screw position sensor 57 inputs a detection signal indicating the detected position of the screw 52 to the controller 81. The detection signal of the screw position sensor 57 may also be used to detect the moving speed of the screw 52.

Encoders 43a and 55a for detecting the rotational speed are attached to the injection motor 43 and the metering motor 55, respectively. The rotational speeds detected by the encoders 43a and 55a are input to the controller 81 as detection signals.

The injection molding machine 10 also includes the moving device 60 for moving the injection device 40 with respect to the stationary mold 32. The moving device 60 includes a reversible moving motor 61 having a brake 61a. The reversible moving motor 61 is fixed to the frame 11 of the injection molding machine 10. The reversible moving motor 61 has an output shaft that is linked to a ball screw shat 62 via a coupling 63. A ball screw nut 64 that is screwed to the ball screw shaft 62 is fixed to a piston 65, and the piston 65 is arranged to move back and forth within a spring cylinder 66. The spring cylinder 66 is arranged to move back and forth with the injection device 40 along a guide 14 on the frame 11. A spring 67 is arranged in a chamber within the spring cylinder 66 that is positioned at the front side of the piston 65. A position sensor 68 is arranged to face the piston 65. The position sensor 68 detects the position of the piston 65 to detect the strain of the spring 67 and inputs the detected strain to the controller 81 as a detection signal.

When the reversible moving motor 61 rotates forward, the ball screw shaft 62 rotates and causes the ball screw nut 64 and the piston 65 to move forward, which in turn causes the injection device 40 to move forward. When the injection device 40 reaches a nozzle touch position, the nozzle 42 comes into contact with the stationary mold 32. When the reversible moving motor 61 is driven further, the piston 65 moves forward into the spring cylinder 66 against the bias force of the spring 67 so that the spring is strained (contracted) and the nozzle touch force pressing the nozzle 42 to the stationary mold 32 is increased. The nozzle touch force may be detected by detecting the strain of the spring 67. When the nozzle touch force reaches a predetermined value, the reversible moving motor 61 is stopped. At this point, the brake (e.g., electromagnetic brake) 61a of the reversible moving motor 61 limits the rotation of the output shaft of the reversible moving motor 60 so that the nozzle touch force may be maintained to the predetermined value. It is noted that the brake 61a allows the output shaft to rotate when the reversible moving motor 61 is driven to rotate. When the reversible moving motor 61 rotates in the reverse direction, the ball screw shaft 62 rotates and causes the ball screw nut 64 and the piston 65 to move backward, which in turn causes the injection device 40 to move backward.

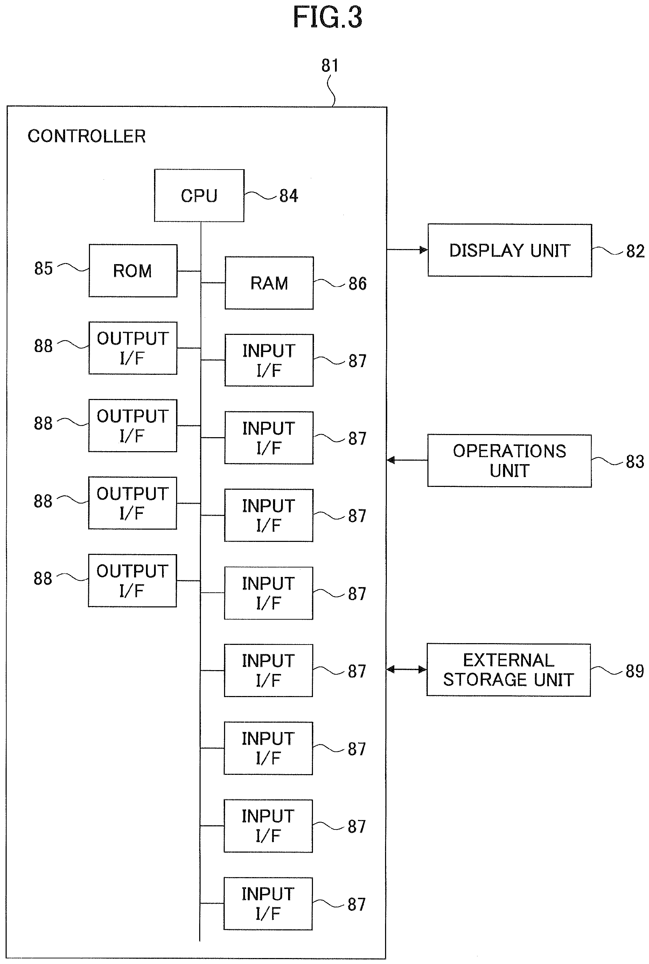

FIG. 3 is a diagram showing the controller 81, a display unit 82, and an operations unit 83 of the injection molding machine 10 according to the present embodiment.

The injection molding machine 10 includes the controller 81 that may be realized by a microcomputer, for example, the display unit 82 that may be realized by a liquid crystal display panel, for example, and the operations unit 83 that may be realized by a keyboard and a mouse, for example. It is noted that in one embodiment, the display unit 82 and the operations unit 83 may be integrated into a touch panel, and the operations unit 83 may be realized by a transparent position detecting unit that is arranged on the display unit 82. In such an embodiment, the operations unit 83 may accept a user input operation by detecting a touch position of the user touching the touch panel. In another embodiment, instead of a keyboard and a mouse, the operations unit 83 may be realized by an operations panel including ten keys, a cursor key, and an execution key, for example. In yet another embodiment, the operations unit 83 may be realized by a position detection unit of a touch panel and an operations panel so that an input operation by a user may be accepted via either the position detection unit of the touch panel or the operations panel.

The controller 81 may include a CPU 84, a ROM 85 that stores programs including control programs, a readable/writable RAM 86 that stores data such as computation results, input interfaces (I/F) 87, output interfaces (I/F) 88, a timer, and a counter, for example. The controller 81 is configured to realize various functions by having the CPU 84 execute a program stored in a recording medium such as the ROM 85 or an external storage unit (e.g., hard disk) 89.

The controller 81 has a function for displaying various setting screens of the injection molding machine 10 at the display unit 82. A user may operate the operations unit 83 while viewing the screen displayed at the display unit 82 to designate various settings of the injection molding machine 10. For example, the user may designate the operation mode of the injection molding machine 10 and operations of the various drive units of the injection molding machine 10.

The operation mode of the injection molding machine 10 may be selected from "automatic mode," "semi-automatic mode," "manual mode," "preparation mode," or "off mode," for example. The "automatic mode" is an operation mode in which the sequence of processes of a cycle such as the mold closing process, the mold clamping process, the nozzle touch process, the injection process, the pressure keeping process, the cooling process, the metering process, the mold opening process, and the ejection process is automatically repeated. The "semi-automatic mode" is an operation mode in which the sequence of processes of a cycle is automatically performed once. The "manual mode" is an operation mode in which the processes are each performed according to user specifications. The "preparation mode" restricts output operations of various drive units, and the "off mode" prohibits operations of the various drive units.

The controller 81 has a function for sending operation commands to various drive units according to the processes performed by the injection molding machine 10 based on the setting values set up by the user. The drive units receiving the operation commands from the controller 81 may include the mold clamping motor 26, the ejector motor 28, the mold thickness adjusting motor 31, the injection motor 43, the metering motor 55, and the reversible moving motor 61, for example.

The controller 81 also has a feedback control function for controlling the various drive units based on the detection signals received from various sensors. The sensors that send detection signals to the controller 81 may include the mold position sensor 26a, the ejector position sensor 28a, the mold thickness sensor 31a, and the screw position sensor 57, for example.

The controller 81 also has a function for determining the quality of a molded part based on the actual performance values detected by the sensors (e.g., mold clamping force and injection pressure of resin). The quality of the molded part may be determined based on the difference between the actual performance values and their corresponding setting values, for example. That is, the molded part may be determined to be a good (non-defective) product if the difference between the actual performance value and the corresponding setting value is within a predetermined range, and the molded part may be determined to be a bad (defective) product if the difference is beyond the predetermined range.

The controller 81 also has a function for recording the actual performance values detected by the sensors in association with an ID of the molded part in the external storage unit 89, for example, and displaying the recorded data at the display unit 82 in response to a request from the user.

The controller 81 also has a function for monitoring the status of the injection molding machine 10 based on the detection signals from the sensors and outputting a predetermined signal to an external device according to the monitored status. In this way, the external device may determine the status of the injection molding machine 10. It is noted that the external device corresponds to a device that is controlled by a controller other than the controller 81 of the injection molding machine 10. For example, the external device may be an ejector, a belt conveyor, or a resin material supplying device that supplies resin material to the injection device 40. The predetermined signal sent to the external device may be output via the output interface 88. It is noted that the controller 81 has plural output interfaces 88.

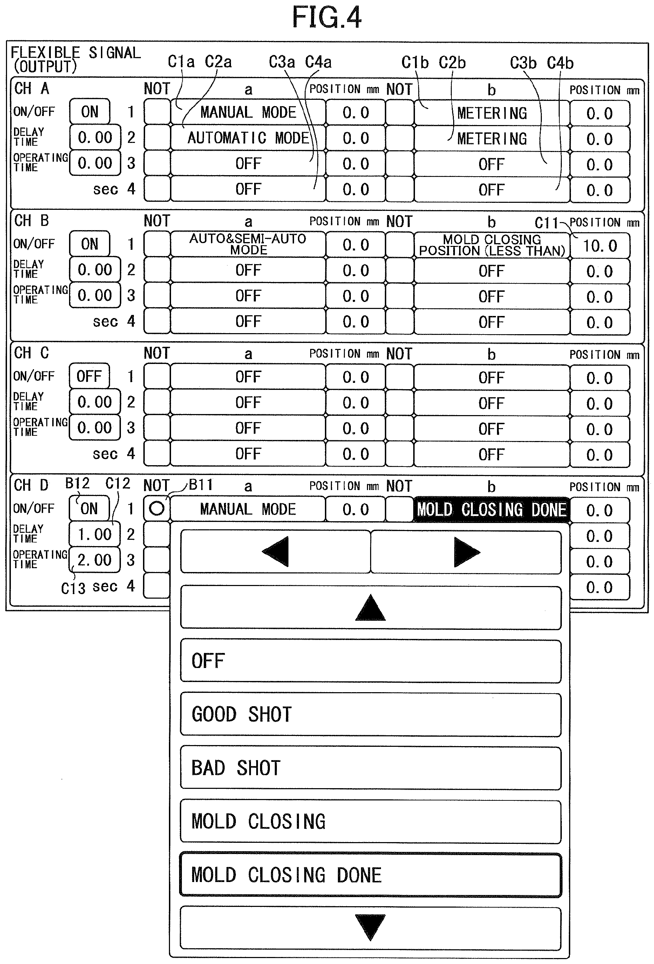

FIG. 4 is a diagram showing an exemplary setting screen for designating conditions for outputting a predetermined signal to an external device. It is noted that this exemplary setting screen may be displayed at the display unit 82 in response to user operations of the operations unit 83.

The setting screen includes input fields C1a-C4b for prompting the user to select a condition from a candidate list including plural conditions for outputting the predetermined signal to the external device. The candidate list may be stored beforehand in a recording medium such as the ROM 85 or the external storage unit 89. The input fields C1a-C4b are provided for each of the output interfaces 88 (i.e., output channels).

To change a condition for outputting the predetermined signal, the user may move a mouse cursor to highlight one of the input fields C1a-C4b and click the mouse. In response to the clicking operation, a pop-up display indicating plural output conditions included in a corresponding candidate list for the highlighted input field may be displayed. In one embodiment, to improve visibility of the setting screen, only a part of the conditions included in the candidate list may be displayed in the pop-up display, and the remaining conditions may be displayed in response to further operations by the user. The user may move the cursor to highlight one of the plural conditions displayed in the pop-up display and click the mouse. In response to this clicking operation, the highlighted condition may be selected and the selected condition may be recorded in the RAM 86 or the external storage unit 89, for example.

It is noted that in other embodiments, the output condition may be changed by touching a touch panel or operating a cursor key of an operations panel instead of moving the mouse cursor to a desired position. Also, instead of clicking the mouse, an execution key may be operated. Further, instead of using the keyboard to input information, the ten keys of the operations panel may be used, and the information input via the ten keys may be entered by operating the execution key, for example.

The candidate list includes conditions relating to the status of the injection molding machine 10 such as the operation modes, the types of processes, the operation statuses of the various drive units during the various processes (including positions of the driven units), and operation performance results of the processes. As the operation modes, the candidate list may include items such as "automatic mode," "semi-automatic mode," "manual mode," "preparation mode," "off mode," as well as "auto & semi-auto mode" collectively representing the "automatic mode" and the "semi-automatic mode," and "all modes" representing all operation modes. As the operation statuses of the drive units during the various processes, the candidate list may include items such as "mold closing," "mold closing done," and "mold closing position (less than)." As the operation performance results of the drive units, the candidate list may include items such as "good shot," and "bad shot." The candidate list may also include an item "off" indicating that the corresponding input field of the input fields C1a-C4b is not used.

The controller 81 determines the output condition for outputting the predetermined signal based on the conditions selected in the input fields C1a-C4b. It is noted that conditions selected at input fields on the same row (e.g., input fields C1a and C1b) correspond to AND conditions. Also, conditions selected at input fields on different rows (e.g., input fields C1a and C2a) correspond to OR conditions. As is shown in FIG. 4, plural (e.g., 4) input field groups each including plural (e.g., 2) input fields for selecting AND conditions are provided in the setting screen. The conditions selected at the input fields of different input field groups correspond to OR conditions.

For example, with respect to output channel A (CH A) shown in FIG. 4, "manual mode" and "metering" are selected at the input fields C1a and C1b on the first row, and "automatic mode" and "metering" are selected at the input fields C2a and C2b on the second row. In this case, (1) "manual mode" and "metering", or (2) "automatic mode" and "metering" correspond to the conditions for outputting a predetermined signal at the output channel A. It is noted that since "off" is selected at the input fields C3a-C4b of the third and fourth rows in this example, these input fields are not used for designating the output conditions for the predetermined signal.

In the present embodiment, the user may change the output condition for outputting the predetermined signal by selecting one condition from plural conditions included in a candidate list while viewing the setting screen. According to an aspect of the present embodiment, since the program of the injection molding machine 10 does not have to be changed, the output conditions may be easily changed. Also, by including plural input fields in the setting screen, the output condition may be specified in greater detail so that convenience may be improved. Further, by providing input fields for enabling the user to select AND conditions as well OR conditions, a wider range of conditions may be set up using the setting screen.

In one embodiment, the setting screen may also include an AND/OR input field (not shown) for enabling the user to select whether two conditions selected by the user correspond to AND conditions or OR conditions. The AND/OR input field may be arranged between the input fields C1a and C1b, for example. Further, to select whether the two conditions selected at the input fields C1a and C1b correspond to AND conditions or OR conditions, the user may move a mouse cursor to highlight the AND/OR input field and click the mouse. In response to the clicking operation, a pull-down menu listing the plural conditions (i.e., AND condition, and OR condition) included in the corresponding candidate list for the AND/OR input field may be displayed. In turn, the user may move the mouse cursor to highlight one of the plural conditions listed in the pull-down menu and click the mouse. In response to such clicking operation, the highlighted condition may be selected and the selected condition may be recorded in the RAM 86 or the external storage unit 89, for example.

The setting screen shown in FIG. 4 also includes a numeric value field C11 for inputting a numeric value as an additional condition. It is noted that the numeric value field C11 is provided for each of the input fields C1a-C4b. To input a numeric value as an additional condition, the user may move the mouse cursor to highlight the corresponding numeric value field C11, click the mouse, and input a numeric value using the keyboard, for example. The controller 81 determines the output condition for outputting the predetermined signal based on the conditions selected at the input fields C1a-C4b and the numeric value input to the numeric value field C11 as an additional condition.

For example, with respect to output channel B (CH B) shown in FIG. 4, "auto & semi-auto mode" and "mold closing position (less than)" are selected at the input fields C1a and C1b on the first row, and "10.0" (mm) is input to the numeric value field C11 for the input field C1b. In this case, the conditions for outputting the predetermined signal at the output channel B corresponds to when (a) the operation mode is "automatic mode" or "semi-automatic mode", and (b) the position of the movable mold 33 is less than or equal to "10.0" mm from the mold closing position.

The setting screen shown in FIG. 4 also includes a delay time field C12 for inputting a delay time for delaying the output timing of the predetermined signal. The delay time field C12 may be provided for each of the output channels A-D. To input a delay time for a corresponding output channel, the user may move the mouse cursor to highlight the delay time field C12 for the corresponding output channel, click the mouse, and input a numeric value using the keyboard. In turn, the controller 81 delays the output timing of the predetermined signal by the delay time period input in the delay time field C12. It is noted that when the delay time field C12 is set equal to the default value "0.00" (sec), the controller 81 starts outputting the predetermined signal once the status of the injection molding machine 10 satisfies the designated output condition (i.e., without delay).

The setting screen shown in FIG. 4 also includes an operating time field C13 for inputting an output time (operating time) of the predetermined signal. The operating time field C13 is provided for each of the output channels A-D. To input the output time of the predetermined signal for a corresponding output channel, the user may move the mouse cursor to highlight the operating time field C13 for the corresponding output channel, click the mouse, and input a numeric value to the operating time field C13. In turn, the controller 81 outputs the predetermined signal for the time period corresponding to the output time input to the operating time field C13. It is noted that when the operating time field C13 is set equal to the default value "0.00" (sec), the controller 81 outputs the predetermined signal throughout the time the status of the injection molding machine 10 satisfies the designated output condition for outputting the predetermined signal.

The setting screen shown in FIG. 4 also includes a select button B11 for enabling the user to select whether to allow or prohibit the output of the predetermined signal when the status of the injection molding machine 10 satisfies the conditions selected at the input fields C1a-C4b. The select button B11 is provided for each of the input fields C1a-C4b. To switch between allowing or prohibiting the output of the predetermined signal with respect to a condition selected at a corresponding input field, the user may move the mouse cursor to highlight the corresponding select button B11 and click the mouse. In response to such clicking operation, the select button B11 may switch between displaying a circle mark "○" and displaying nothing. In the case where nothing is displayed in the select buttons B11 of the input fields C1-C4b, the controller 81 allows the output of the predetermined signal when the status of the injection molding machine 10 satisfies the conditions selected at the input fields C1a-C4b, and prohibits the output of the predetermined signal when the output conditions are not satisfied. On the other hand, in the case where the circle mark "○" is displayed in one or more of the select buttons B11 of the input fields C1a-C4b, the controller 81 prohibits the output of the predetermined signal when the status of the injection molding machine 10 satisfies the condition selected at the corresponding input field with the circle mark "○" displayed at the select button B11, and allows the output of the predetermined signal when one or more predetermined conditions other than the condition selected at the corresponding input field are satisfied. It is noted that the predetermined conditions may be recorded in the recording medium such as the ROM 85 or the external storage unit 89 along with the candidate list.

For example, with respect to the output channel D (CH D) shown in FIG. 4, the circle mark "○" is displayed in the select button B11 of the input field C1a on the first row. Further, "manual mode" and "mold closing done" are selected at the input fields C1a and C1b. In this case, the output condition for outputting the predetermined signal corresponds to when (a) the operation mode is a mode other than "manual mode" (i.e., "automatic mode," "semi-automatic mode," "preparation mode," or "off mode"), and (b) "mold closing done". It is noted that since "off" is selected at the input fields C2a-C4b of the second through fourth rows, these input fields area not used for designating the output condition for outputting the predetermined signal.

The setting screen shown in FIG. 4 also includes an ON/OFF button B12 for enabling the user to select whether to use a corresponding output channel. The ON/OFF button B12 is provided for each of the output channels A-D. For example, to change the setting regarding whether to use the output channel A, the user may move the mouse cursor to highlight the ON/OFF button B12 of the output channel A and click the mouse. In response to such clicking operation, the display of the ON/OFF button B12 may be switched from "OFF" to "ON" or vice versa. In the case where "OFF" is displayed at the ON/OFF button B12, the controller 81 prohibits the output of the predetermined signal at the output interface 88 of the output channel A regardless of the status of the injection molding machine 10. On the other hand, in the case where "ON" is displayed at the ON/OFF button B12, the controller allows the output of the predetermined signal when the status of the injection molding machine 10 satisfies the designated output condition.

The setting screen may also include a memo input field (not shown) for displaying information input by the user. The memo input field may be provided for each output interface 88 (i.e., for each output channel). To input information in the memo input field, the user may move the mouse cursor to highlight the corresponding memo input field, click the mouse, and input information to the memo input field using the keyboard. The input information may then be recorded in the recording medium such as the RAM 86 or the external storage unit 89 and displayed in the corresponding memo input field. For example, the user may input information items such as the name of the output interface (connection terminal) 88, information on the external device connected to the output interface 88, and conditions for outputting the predetermined signal at the output interface 88. In this way, user convenience may be further improved, for example.

The controller 81 also has an interlocking function for disabling operations of the injection molding machine 10 depending on whether a predetermined signal from an external device is input to the injection molding machine 10. In this way, damage and defective operations of the injection molding machine 10 may be prevented, for example. The predetermined signal from the external device may be input to the controller 81 via the input interface 87. It is noted that the controller 81 includes plural input interfaces 87.

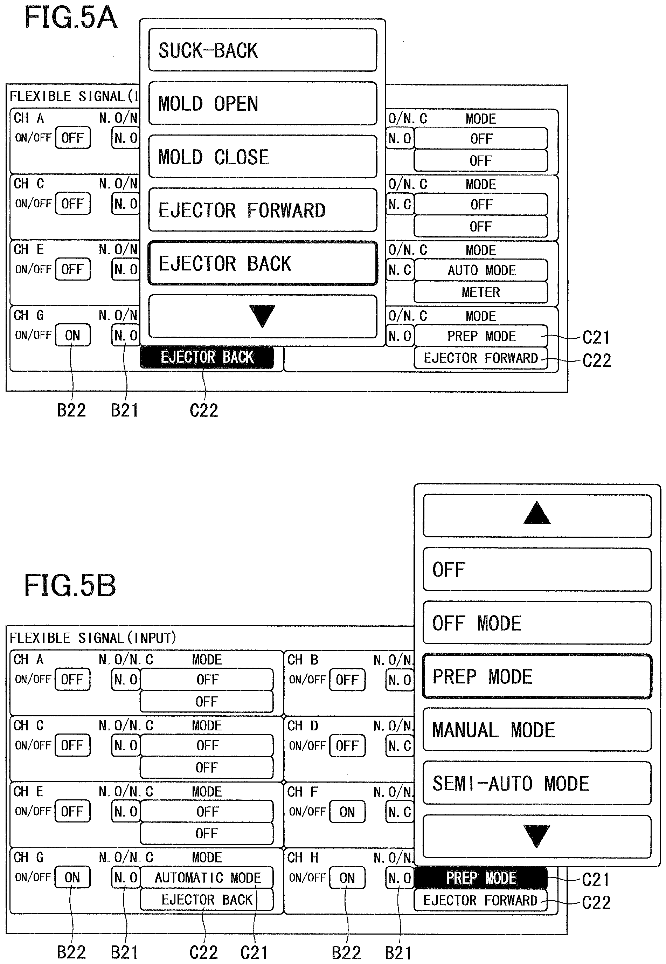

FIGS. 5A-5B are diagrams showing an exemplary setting screen for designating conditions relating to an operation of the injection molding machine 10 to be disabled depending on whether a predetermined signal from an external device is input to the injection molding machine 10. FIG. 5A shows the setting screen when a pop-up display listing the conditions included in the candidate list for an input field C22 is displayed. FIG. 5B shows the setting screen when a pop-up display listing the conditions included in the candidate list for an input field C21 is displayed. It is noted that this exemplary setting screen may be displayed at the display unit 82 in response to user operations of the operations unit 83.

The setting screen shown in FIGS. 5A-5B includes the input fields C21, C22 for enabling the user to select one of plural conditions included in a candidate list of conditions relating to the operation to be disabled depending on whether a predetermined signal from an external device is input. The candidate list may be stored in the recording medium such as the ROM 85 or the external storage unit 89 beforehand. It is noted that in the illustrated example, different candidate lists are displayed for the input fields C21 and C22. However, in other embodiments, the same candidate list may be displayed for the input fields C21 and C22. It is noted that the input fields C21 and C22 are provided for each of the input interfaces 87 (i.e., input channels).

To change a condition relating to the operation to be disabled depending on whether the predetermined signal is input, the user may move the mouse cursor to highlight the input field C21 or C22 and click the mouse. In response to such clicking operation, a pop-up display listing the plural conditions included in the corresponding candidate list may be displayed. In one embodiment, to improve the visibility of the setting screen, only a part of the conditions included in the candidate list may be displayed in the pop-up display, and the rest of the conditions may be displayed upon further operations by the user. The user may then move the mouse cursor to highlight one of the conditions displayed in the pop-up display and click the mouse. In response to such clicking operation, the highlighted condition may be selected at the corresponding input field C21 or C22 and the selected condition may be recorded in a recording medium such as the RAM 86 or the external storage unit 89.

The candidate list for the input field C21 includes conditions relating to the operation mode of the injection molding machine 10. For example, the candidate list may include items such as "automatic mode," "semi-automatic mode," "manual mode," "preparation mode," "off mode," as well as "auto & semi-auto mode," and "all modes" as conditions relating to the operations mode. The candidate list for the input field C21 may also include the item "off" for indicating that the input field C21 is not used.

The candidate list for the input field C22 includes conditions relating to the operation processes of the injection molding machine 10. For example, the candidate list of the input field 22 may include items such as "injection," "meter," "suck-back," "mold close," "mold open," "ejector forward," "ejector back," "mold thickness forward," "mold thickness back," "reversible moving forward (injection device forward)," and "reversible moving back (injection device back)" as conditions relating to the operation processes. The candidate list of the input field C22 may also include the item "off" for indicating that the input field C22 is not used.

The controller 81 determines the operation to be disabled depending on whether the predetermined signal is input based on the conditions selected at the input fields C21 and C22. It is noted that the conditions selected at the input fields C21 and C22 correspond to AND conditions.

For example, with regard to the input channel G (CH G) shown in FIG. 5B, "automatic mode" is selected at the input field C21 and "ejector back" is selected at the input field C22. Accordingly, at the input channel G, "automatic mode" and " ejector back" correspond to the operation to be disabled depending on whether the predetermined signal is input.

In the present embodiment, the user may change the operation to be disabled depending on whether the predetermined signal is input by selecting a condition from plural conditions included in a corresponding candidate list while viewing the setting screen. According to an aspect of the present embodiment, since the program of the injection molding machine 10 does not have to be changed, the operation to be disabled depending on whether the predetermined signal is input may be easily changed, for example. Also, by including plural input fields in the setting screen, conditions relating to the operation to be disabled depending on whether the predetermined signal is input may be set up in greater detail so that user convenience may be improved, for example.

The setting screen shown in FIGS. 5A-5B also includes a select button B21 for enabling the user to designate the correlation between the presence/absence of the predetermined signal input and the disabling of the operation determined based on the conditions selected at the input fields C21 and C22. It is noted that the select button B21 is provided for each of the input channels A-H. To change the above correlation, the user may move the mouse cursor to highlight the select button B21 and click the mouse. In response to such clicking operation, the display of the select button B21 may be switched from "N.O" to "N.C" or vice versa. In the case where "N.O" is displayed at the select button B12, the controller 81 allows the corresponding operation that is determined based on the conditions selected at the input fields C21 and C22 while the predetermined signal is not input, and activates the interlocking function to prohibit the corresponding operation while the predetermined signal is input. On the other hand, in the case where "N.C" is displayed at the select button B21, the controller 81 allows the corresponding operation determined based on the conditions selected at the input fields C21 and C22 while the predetermined signal is input, and activates the interlocking function to prohibit the corresponding operation while the predetermined signal is not input. According to an aspect of the present embodiment, by enabling the user to change the correlation between the predetermined signal input and the corresponding operation, the conditions for activating the interlocking function may be adjusted (optimized) according to the type of the external device used, for example.

The setting screen shown in FIGS. 5A-5B also includes an ON/OFF button B22 for enabling the user to select whether to use a corresponding input channel. It is noted that the ON/OFF button B22 is provided for each of the input channels A-H. For example, to change the setting regarding whether to use the input channel G, the user may move the mouse cursor to highlight the ON/OFF button B22 for the input channel G and click the mouse. In response to such clicking operation, the display of the ON/OFF button B22 may be switched from "OFF" to "ON" or vice versa. In the case where "OFF" is displayed at the ON/OFF button 22, the input channel G is not used, and the injection molding machine 10 is operated regardless of the input status of the input interface 87 for the input channel G. On the other hand, in the case where "ON" is displayed at the ON/OFF button B22, the input channel G is used, and the corresponding operation of the injection molding machine 10 determined based on the conditions selected at the input fields C21 and C22 may be disabled according to the input status of the input interface 87 of the input channel G.

The setting screen may also include a memo input field (not shown) for displaying information input by the user. The memory input field may be provided for each of the input interfaces 88 (i.e., input channels). In this way, user convenience may be further improved, for example.

Further, although the present invention has been described above in connection with certain illustrative embodiments, the present invention is not limited to these embodiments, and numerous variations and modifications may be made without departing from the scope of the present invention.

## Claims

1. An injection molding machine (10) comprising:
a controller (81) that monitors a status of the injection molding machine (10) and outputs a predetermined signal to an external device of the injection molding machine (10) according to the monitored status;
a display unit (82) that displays a setting screen relating to an output condition for outputting the predetermined signal; and
an operations unit (83) that accepts an input operation by a user; wherein
the setting screen includes an input field for prompting the user to select a condition from a candidate list including plural conditions for outputting the predetermined signal; wherein a condition for outputting a predetermined signal from the injection molding machine to the external device can be changed by selecting an input field, and
the controller (81) is configured to determine the output condition for outputting the predetermined signal based on the condition selected at the input field (C1a-C1b),
wherein
the setting screen includes more than one of the input fields; and
the controller (81) is configured to determine the output condition for outputting the predetermined signal based on the conditions selected at the input fields,
wherein the input fields (C1a-C1b)include at least two input fields for prompting the user to select conditions that correspond to AND conditions and at least two input fields for prompting the user to select conditions that correspond to OR conditions,
the input fields include at least a first input field group including at least two of the input fields for selecting the AND conditions and a second input field group including at least two of the input fields for selecting the AND conditions; and
a first condition selected at the first input field group and a second condition selected at the second input field group correspond to OR conditions with respect to each other.

2. The injection molding machine as claimed in claim 1, wherein
the controller (81) is configured to determine the output condition for outputting the predetermined signal by viewing the conditions as at least one of AND conditions and OR conditions,

3. The injection molding machine as claimed in claim 1, wherein
each input field group includes a plurality of input fields arranged on the same row, and a plurality of input field groups are arranged in a column.

4. The injection molding machine (10) as claimed in any one of claims 1 to 3, wherein
the input fields include an AND/OR input field for prompting the user to select whether at least two of the conditions selected by the user correspond to AND conditions or OR conditions.

5. The injection molding machine (10) as claimed in any one of claims 1 to 4, wherein
the setting screen includes a numeric value field for inputting a numeric value as an additional condition to be added to the condition selected at the input field.

6. The injection molding machine (10) as claimed in any one of claims 1 to 5, wherein
the setting screen includes a button (B11) for prompting the user to select whether to allow or prohibit the output of the predetermined signal when the status of the injection molding machine satisfies the condition selected at the input field.

7. The injection molding machine (10) as claimed in any one of claims 1 to 6, wherein
the setting screen includes a delay time field (C12) for inputting a delay time for delaying an output timing of the predetermined signal.

8. The injection molding machine (10) as claimed in
any one of claims 1 to 7, wherein
the setting screen includes an output time field for inputting an output time of the predetermined signal.

9. An injection molding machine (10) comprising: a controller that disables an operation of the injection molding machine depending on whether a predetermined signal from an external device of the injection molding machine is input;
a display unit that displays a setting screen relating to the operation to be disabled depending on whether the predetermined signal is input; and
an operations unit that accepts an input operation by a user; wherein
the setting screen includes an input field for prompting the user to select a condition from a candidate list of plural conditions relating to the operation to be disabled depending on whether the predetermined signal is input; wherein the condition relating to the operation to be disabled depending on whether a predetermined signal from the external device is input, can be changed by selecting an input field, and
the controller is configured to determine the operation to be disabled depending on whether the predetermined signal is input based on the condition selected at the input field.

10. The injection molding machine (10) as claimed in claim 9, wherein
the setting screen includes a button for prompting the user to designate a correlation between the presence/absence of the predetermined signal input and the disabling of the operation determined based on the condition selected at the input field.

11. The injection molding machine (10) as claimed in claim 9 or 10, wherein the setting screen includes more than one of the
input fields; and
the controller (81) is configured to determine the operation to be disabled depending on whether the predetermined signal is input based on the conditions selected at the input fields.

## Patentansprüche

1. Spritzgussmaschine (10), umfassend:
eine Steuervorrichtung (81), die einen Zustand der Spritzgussmaschine (10) überwacht und ein vorbestimmtes Signal zu einer externen Vorrichtung der Spritzgussmaschine (10) gemäß dem überwachten Zustand ausgibt;
eine Anzeigeeinheit (82), die einen Einstellungsbildschirm in Zusammenhang mit einer Ausgabebedingung für das Ausgeben des vorbestimmten Signals anzeigt; und
eine Betriebseinheit (83), die einen Eingabevorgang durch einen Benutzer akzeptiert; wobei
der Einstellungsbildschirm ein Eingabefeld für das Auffordern des Benutzers beinhaltet, eine Bedingung aus einer Kandidatenliste, die mehrere Bedingungen für das Ausgeben des vorbestimmten Signals beinhaltet, auszuwählen; wobei eine Bedingung für das Ausgeben eines vorbestimmten Signals aus der Spritzgussmaschine zu der externen Vorrichtung durch Auswählen eines Eingabefelds geändert werden kann, und
die Steuervorrichtung (81) konfiguriert ist, die Ausgabebedingung für das Ausgeben des vorbestimmten Signals basierend auf der Bedingung zu bestimmen, die an dem Eingabefeld (C1a-C1b)ausgewählt wird,
wobei
der Einstellungsbildschirm mehr als eines der Eingabefelder beinhaltet; und
die Steuervorrichtung (81) konfiguriert ist, die Ausgabebedingung für das Ausgeben des vorbestimmten Signals basierend auf der Bedingung zu bestimmen, die an den Eingabefeldern ausgewählt wird,
wobei die Eingabefelder (C1a-C1b)mindestens zwei Eingabefelder beinhalten, um den Benutzer aufzufordern, Bedingungen auszuwählen, die UND-Bedingungen entsprechen, und mindestens zwei Eingabefelder, um den Benutzer aufzufordern, Bedingungen auszuwählen, die ODER-Bedingungen entsprechen,
die Eingabefelder mindestens eine erste Eingabefeldgruppe, die mindestens zwei der Eingabefelder für Auswählen der UND-Bedingungen beinhaltet, und eine zweite Eingabefeldgruppe, die mindestens zwei der Eingabefelder für Auswählen der UND-Bedingungen beinhaltet, beinhalten; und
eine erste Bedingung, die an der ersten Eingabefeldgruppe ausgewählt wird, und eine zweite Bedingung, die an der zweiten Eingabefeldgruppe ausgewählt wird, ODER-Bedingungen in Bezug aufeinander entspricht.

2. Spritzgussmaschine nach Anspruch 1,
wobei die Steuervorrichtung (81) konfiguriert ist, die Ausgabebedingung für das Ausgeben des vorbestimmten Signals zu bestimmen, indem die Bedingungen als mindestens eine von UND-Bedingungen und ODER-Bedingungen geprüft werden.

3. Spritzgussmaschine nach Anspruch 1, wobei
jede Eingabefeldgruppe eine Vielzahl von Eingabefeldern, die auf derselben Reihe eingerichtet ist, und eine Vielzahl von Eingabefeldern, die in einer Spalte eingerichtet ist, beinhaltet.

4. Spritzgussmaschine (10) nach einem der Ansprüche 1 bis 3, wobei
die Eingabefelder ein UND/ODER-Eingabefeld beinhalten, um den Benutzer aufzufordern auszuwählen, ob mindestens zwei der Bedingungen, die der Benutzer ausgewählt hat, UND-Bedingungen oder ODER-Bedingungen entsprechen.

5. Spritzgussmaschine (10) nach einem der Ansprüche 1 bis 4, wobei
der Einstellungsbildschirm ein Feld mit numerischen Werten zum Eingeben eines numerischen Werts als eine zusätzliche Bedingung beinhaltet, die zu der Bedingung, die an dem Eingabefeld ausgewählt wird, hinzuzufügen ist.

6. Spritzgussmaschine (10) nach einem der Ansprüche 1 bis 5, wobei
der Einstellungsbildschirm einen Knopf (B11) beinhaltet, um den Benutzer aufzufordern auszuwählen, ob das Ausgeben des vorbestimmten Signals zu gestatten oder zu verbieten ist, wenn der Zustand der Spritzgussmaschine die Bedingung, die an dem Eingabefeld ausgewählt wird, erfüllt.

7. Spritzgussmaschine (10) nach einem der Ansprüche 1 bis 6, wobei
der Einstellungsbildschirm ein Verzögerungszeitfeld (C12) zum Eingeben einer Verzögerungszeit zum Verzögern eines Ausgabezeitpunkts des vorbestimmten Signals beinhaltet.

8. Spritzgussmaschine (10) nach einem der Ansprüche 1 bis 7, wobei
der Einstellungsbildschirm ein Ausgabezeitfeld für Eingeben einer Ausgabezeit des vorbestimmten Signals beinhaltet.

9. Spritzgussmaschine (10), umfassend: eine Steuervorrichtung, die einen Vorgang der Spritzgussmaschine in Abhängigkeit davon deaktiviert, ob ein vorbestimmtes Signal von einer externen Vorrichtung der Spritzgussmaschine eingegeben wird;
eine Anzeigeeinheit, die einen Einstellungsbildschirm in Zusammenhang mit dem Vorgang, der zu deaktivieren ist, in Abhängigkeit davon anzeigt, ob das vorbestimmte Signal eingegeben wird; und
eine Betriebseinheit, die einen Eingabevorgang durch einen Benutzer akzeptiert; wobei
der Einstellungsbildschirm ein Eingabefeld zum Auffordern des Benutzers beinhaltet, eine Bedingung aus einer Kandidatenliste mehrerer Bedingungen in Zusammenhang mit dem Vorgang, der zu deaktivieren ist, in Abhängigkeit davon auszuwählen, ob das vorbestimmte Signal eingegeben wird; wobei die Bedingung in Zusammenhang mit dem Vorgang, der zu deaktivieren ist, davon abhängt, ob ein vorbestimmtes Signal, das von der externen Vorrichtung eingegeben wird, durch Auswählen eines Eingabefelds geändert werden kann, und
die Steuervorrichtung konfiguriert ist, den Vorgang, der zu deaktivieren ist, in Abhängigkeit davon zu bestimmen, ob das vorbestimmte Signal basierend auf der Bedingung, die an dem Eingabefeld ausgewählt wird, eingegeben wird.

10. Spritzgussmaschine (10) nach Anspruch 9, wobei
der Einstellungsbildschirm einen Knopf beinhaltet, um den Benutzer aufzufordern, eine Korrelation zwischen der Anwesenheit/Abwesenheit der vorbestimmten Signaleingabe und dem Deaktivieren des Vorgangs, die basierend auf der Bedingung, die an dem Eingabefeld ausgewählt wird, bestimmt wird, zu bezeichnen.

11. Spritzgussmaschine (10) nach Anspruch 9 oder 10, wobei der Einstellungsbildschirm mehr als eines der Eingabefelder beinhaltet; und
die Steuervorrichtung (81) konfiguriert ist, den Vorgang, der zu deaktivieren ist, in Abhängigkeit davon zu bestimmen, ob das vorbestimmte Signal basierend auf den Bedingungen, die an den Eingabefeldern ausgewählt werden, eingegeben wird.

## Revendications

1. Machine de moulage à injection (10) comprenant :
un dispositif de commande (81) qui contrôle un statut de la machine de moulage à injection (10) et sort un signal prédéterminé sur un dispositif externe de la machine de moulage à injection (10) en fonction du statut contrôlé ;
une unité d'affichage (82) qui affiche un écran de réglage se rapportant à une condition de sortie pour sortir le signal prédéterminé ; et
une unité d'opérations (83) qui accepte une opération d'entrée par un utilisateur ; dans laquelle
l'écran de réglage inclut un champ d'entrée pour inviter l'utilisateur à sélectionner une condition parmi une liste candidate incluant plusieurs conditions pour sortir le signal prédéterminé ; dans laquelle une condition pour sortir un signal prédéterminé depuis la machine de moulage à injection sur le dispositif externe peut être changée en sélectionnant un champ d'entrée, et
le dispositif de commande (81) est configuré pour déterminer la condition de sortie pour sortir le signal prédéterminé sur la base de la condition sélectionnée au niveau du champ d'entrée (C1a-C1b),
dans laquelle
l'écran de réglage inclut plus d'un des champs d'entrée ; et
le dispositif de commande (81) est configuré pour déterminer la condition de sortie pour sortir le signal prédéterminé sur la base des conditions sélectionnées au niveau des champs d'entrée,
dans laquelle les champs d'entrée (C1a-C1b)incluent au moins deux champs d'entrée pour inviter l'utilisateur à sélectionner des conditions qui correspondent à des conditions ET et au moins deux champs d'entrée pour inviter l'utilisateur à sélectionner des conditions qui correspondent à des conditions OU,
les champs d'entrée incluent au moins un premier groupe de champs d'entrée incluant au moins deux des champs d'entrée pour sélectionner les conditions ET et un second groupe de champs d'entrée incluant au moins deux des champs d'entrée pour sélectionner les conditions ET ; et
une première condition sélectionnée au niveau du premier groupe de champs d'entrée et une seconde condition sélectionnée au niveau du second groupe de champs d'entrée correspondent à des conditions OU l'une par rapport à l'autre.

2. Machine de moulage à injection selon la revendication 1, dans laquelle
le dispositif de commande (81) est configuré pour déterminer la condition de sortie pour sortir le signal prédéterminé en visualisant les conditions comme au moins l'une de conditions ET et de conditions OU.

3. Machine de moulage à injection selon la revendication 1, dans laquelle
chaque groupe de champs d'entrée inclut une pluralité de champs d'entrée agencés sur la même rangée, et une pluralité de groupes de champs d'entrée sont agencés en une colonne.

4. Machine de moulage à injection (10) selon l'une quelconque des revendications 1 à 3, dans laquelle
les champs d'entrée incluent un champ d'entrée ET/OU pour inviter l'utilisateur à sélectionner si au moins deux des conditions sélectionnées par l'utilisateur correspondent à des conditions ET ou à des conditions OU.

5. Machine de moulage à injection (10) selon l'une quelconque des revendications 1 à 4, dans laquelle
l'écran de réglage inclut un champ de valeur numérique pour entrer une valeur numérique en tant que condition supplémentaire à ajouter à la condition sélectionnée au niveau du champ d'entrée.

6. Machine de moulage à injection (10) selon l'une quelconque des revendications 1 à 5, dans laquelle
l'écran de réglage inclut un bouton (B11) pour inviter l'utilisateur à sélectionner s'il faut permettre ou interdire la sortie du signal prédéterminé quand le statut de la machine de moulage à injection satisfait la condition sélectionnée au niveau du champ d'entrée.

7. Machine de moulage à injection (10) selon l'une quelconque des revendications 1 à 6, dans laquelle
l'écran de réglage inclut un champ temps de retard (C12) pour entrer un temps de retard pour retarder un moment de sortie du signal prédéterminé.

8. Machine de moulage à injection (10) selon l'une quelconque des revendications 1 à 7, dans laquelle
l'écran de réglage inclut un champ temps de sortie pour entrer un temps de sortie du signal prédéterminé.

9. Machine de moulage à injection (10) comprenant : un dispositif de commande qui désactive une opération de la machine de moulage à injection selon qu'un signal prédéterminé provenant d'un dispositif externe de la machine de moulage à injection est entré ou non ;
une unité d'affichage qui affiche un écran d'affichage se rapportant à l'opération à désactiver selon que le signal prédéterminé est entré ou non ; et
une unité d'opérations qui accepte une opération d'entrée par un utilisateur; dans laquelle
l'écran d'affichage inclut un champ d'entrée pour inviter l'utilisateur à sélectionner une condition parmi une liste candidate de plusieurs conditions se rapportant à l'opération à désactiver selon que le signal prédéterminé est entré ou non ; dans laquelle la condition se rapportant à l'opération à désactiver selon qu'un signal prédéterminé provenant du dispositif externe est entré ou non, peut être changée en sélectionnant un champ d'entrée, et
le dispositif de commande est configuré pour déterminer l'opération à désactiver selon que le signal prédéterminé est entré ou non sur la base de la condition sélectionnée au niveau du champ d'entrée.

10. Machine de moulage à injection (10) selon la revendication 9, dans laquelle
l'écran de réglage inclut un bouton pour inviter l'utilisateur à désigner une corrélation entre la présence/absence de l'entrée de signal prédéterminé et la désactivation de l'opération déterminée sur la base de la condition sélectionnée au niveau du champ d'entrée.

11. Machine de moulage à injection (10) selon la revendication 9 ou 10, dans laquelle l'écran de réglage inclut plus d'un des champs d'entrée ; et
le dispositif de commande (81) est configuré pour déterminer l'opération à désactiver selon que le signal prédéterminé est entré ou non sur la base des conditions sélectionnées au niveau des champs d'entrée.
